# DEMANDE DE BREVET EUROPEEN

(11) **EP 3 739 718 A1**
(43) Date de publication de la demande: **18.11.2020**
(21) Numéro de dépôt: 20172540.5
(22) Date de dépôt: 30.04.2020
(51) Int. Cl.: H02J 7/00, B62K 3/00, B62J 11/00, H04M 1/04, H02J 50/10, F16M 13/00, H02J 50/90, B62J 50/21, F16M 11/04, F16M 13/02

(54) **CHARGEUR SANS FIL POUR TROTTINETTE**

(30) Priorité: 13.05.2019 FR 1904951
(71) Demandeur: Bigben Connected, 59273 Fretin (FR)
(72) Inventeur: FALC, Alain, 59273 Fretin (FR); BASSOT, Michel, 59273 Fretin (FR); BOYER, Stéphanie, 59273 Fretin (FR); ROULEAUD, Victoria, 59273 Fretin (FR)
(74) Mandataire: Poindron, Cyrille

(57) **Abrégé**

Chargeur pour appareil électronique portable (300), comprenant :
- un boîtier (100),
- une unité de charge sans fil (110) logée dans le boîtier (100),
- une pluralité de bras de préhension (200), mobiles et réglables par rapport au boîtier (100), chaque bras de préhension (200) comprenant une portion d'accostage (210) agencée pour s'engager avec l'appareil électronique portable (300) de sorte à accoupler l'appareil électronique portable (300) avec le chargeur et le positionner en regard de l'unité de charge sans fil (110),
caractérisé en ce que la pluralité de bras de préhension (200) comprend quatre bras de préhension (200).

## Description

La présente invention concerne un chargeur sans fil pour appareil électronique portable, et en particulier un chargeur sans fil pour appareil électronique portable, destiné à être monté à demeure sur un véhicule à deux roues, tel qu'une trottinette.

Il est connu de proposer des chargeurs sans fil pour appareil électronique portable (comme un téléphone intelligent ou une tablette), mais typiquement ces chargeurs ne sont pas adaptés pour procurer une utilisation dans le cadre de la mobilité douce, en particulier avec un deux roues tel qu'un vélo ou plus particulièrement une trottinette électrique. En effet, les dispositifs connus ne permettent pas de garantir que l'utilisateur puisse aisément placer et retirer son appareil électronique portable sur le chargeur, tout en évitant une chute. Les dispositifs connus ne peuvent pas non plus être utilisés en extérieur.

Le chargeur sans fil selon l'invention permet de remédier à ces inconvénients. L'invention propose à cet effet un chargeur sans fil qui garantit de manière séparée ou en même temps une utilisation aisée, une sécurisation efficace contre les chutes, et/ou une utilisation en plein air.

En particulier, l'invention propose un chargeur pour appareil électronique portable, comprenant :
- un boîtier,
- une unité de charge sans fil logée dans le boîtier,
- une pluralité de bras de préhension, mobiles et réglables par rapport au boîtier,
chaque bras de préhension comprenant une portion d'accostage agencée pour s'engager avec l'appareil électronique portable de sorte à accoupler l'appareil électronique portable avec le chargeur et le positionner en regard de l'unité de charge sans fil,
caractérisé en ce que la pluralité de bras de préhension comprend quatre bras de préhension.

Le chargeur selon la mise en œuvre ci-dessus comprend quatre bras de préhension, ce qui permet d'accoster l'appareil électronique portable dans toutes les directions (de sorte à bloquer tous ses degrés de liberté), afin de le maintenir efficacement en place sur le chargeur, même en cas de secousse.

Selon une mise en œuvre, chacune des portions d'accostage peut comprendre une empreinte en creux et/ou un retour, de sorte à procurer un accouplement avec l'appareil électronique portable via un bord et une portion de face supérieure et une portion de face inférieure. En d'autres termes, chaque portion d'accostage bloque l'appareil électronique portable selon les deux directions normales à l'écran de l'appareil électronique portable, en plus d'un blocage selon une direction dans le plan de l'écran.

En d'autres termes, les bras de préhension avec la portion d'accostage forment des griffes qui peuvent agripper efficacement l'appareil électronique portable.

Selon une mise en œuvre, chacun des quatre bras de préhension peut être agencé pour positionner sa portion d'accostage respective sur un sommet d'un parallélogramme rectangle. Autrement dit, chaque portion d'accostage s'accouple sur un coin de l'appareil électronique portable. En conséquence, le parallélogramme rectangle est celui formé par l'appareil électronique portable.

Selon une mise en œuvre, le chargeur peut comprendre un mécanisme d'articulation, et chacun des quatre bras de préhension peut être connecté au mécanisme d'articulation de sorte à synchroniser le mouvement des quatre bras de préhension entre eux. Les bras de préhension sont engagés les uns avec les autres pour procurer un mouvement synchronisé : il suffit de tirer ou pousser l'une des bras de préhension pour forcer un mouvement des autres bras de préhension. L'utilisation est facilitée.

Selon une mise en œuvre :
- le mécanisme d'articulation peut comprendre un engrenage central,
- chacun des bras de préhension peut comprendre une crémaillère,
et chaque crémaillère peut être engagée avec l'engrenage central.

Selon une mise en œuvre le mécanisme d'articulation peut comprendre un élément élastique (un ressort) pour assurer un retour des bras de préhension en butée sur l'appareil électronique portable et/ou dans une position escamotée ou rétractée.

Selon une mise en œuvre, chacun des bras de préhension peut être agencé pour se déplacer selon la direction d'une diagonale d'un même parallélogramme rectangle, chaque bras de préhension peut être agencé pour se déplacer selon la direction d'une diagonale différente des autres bras de préhension. Autrement dit, chaque bras de préhension se déploie et se rétracte selon une diagonale de l'appareil électronique portable.

Selon une mise en œuvre, l'engrenage central peut être agencé au niveau de l'intersection des diagonales du parallélogramme rectangle.

Selon une mise en œuvre, au moins une des portions d'accostage peut être amovible ou mobile par rapport à son bras de préhension respectif, de sorte à pouvoir régler une position relative finale entre l'appareil électronique portable et l'unité de charge sans fil. Si l'utilisateur possède un appareil électronique portable avec une zone de charge sans fil bien spécifique, il peut alors régler la position des portions d'accostage (avec ou sans patins antidérapant) sur les bras de préhension, de sorte définir une position spécifique accouplée, qui alignera la zone spécifique de charge sans fil de l'appareil électronique portable avec la position sur le chargeur de l'unité de charge sans fil. On peut prévoir une mire ou un repère sur le boîtier pour indiquer à l'utilisateur la position de l'unité de charge sans fil.

Selon une mise en œuvre, au moins un des bras de préhension présente une longueur réglable, de sorte à pouvoir régler une position relative finale entre l'appareil électronique portable et l'unité de charge sans fil. On peut prévoir deux bras réglables d'un côté. On peut prévoir un ou plusieurs bras en deux parties imbriquées selon une liaison glissière, avec une vis de serrage, ou des crans pour allonger / raccourcir les bras et bloquer une fois la longueur adéquate trouvée. Si l'utilisateur possède un appareil électronique portable avec une zone de charge sans fil bien spécifique, il peut alors régler la longueur des bras de préhension (les portions d'accostage restant positionnées à l'extrémité libre des bras de préhension), de sorte définir une position spécifique accouplée (l'appareil électronique peut alors être décentré vis-à-vis du boîtier), qui alignera la zone spécifique de charge sans fil de l'appareil électronique portable avec la position sur le chargeur de l'unité de charge sans fil. On peut prévoir une mire ou un repère sur le boîtier pour indiquer à l'utilisateur la position de l'unité de charge sans fil.

Selon une mise en œuvre, au moins une des portions d'accostage peut comprendre un patin antidérapant, par exemple en thermoplastique élastomère ou en silicone. Le maintien en place est amélioré, en supprimant les possibilités de glissement.

Selon une mise en œuvre, ledit au moins patin antidérapant est une gomme, par exemple en thermoplastique élastomère ou en silicone, fixée sur chacune des portions d'accostage. On peut prévoir un montage amovible ou non (surmoulé par exemple).

Selon une mise en œuvre, ledit au moins un patin antidérapant, peut être amovible ou mobile par rapport à son bras de préhension respectif, de sorte à pouvoir régler une position relative finale entre l'appareil électronique portable et l'unité de charge sans fil. Si l'utilisateur possède un appareil électronique portable avec une zone de charge sans fil bien spécifique, il peut alors régler la position des portions d'accostage et/ou des patins antidérapant sur les bras de préhension, de sorte définir une position spécifique accouplée, qui alignera la zone spécifique de charge sans fil de l'appareil électronique portable avec la position sur le chargeur de l'unité de charge sans fil. On peut prévoir une mire ou un repère sur le boîtier pour indiquer à l'utilisateur la position de l'unité de charge sans fil.

Selon une mise en œuvre, l'unité de charge sans fil peut être une unité de charge par induction, et/ou peut comprendre une bobine, autrement appelée solénoïde.

Selon une mise en œuvre, le boîtier peut comprendre au moins un compartiment étanche dans lequel est logée l'unité de charge sans fil. L'invention propose de loger l'unité de charge sans fil dans un logement étanche, de sorte à permettre une utilisation en plein air. On peut prévoir que le logement comprend une façade en commun avec le boîtier, et une trappe, avec un joint ou un montage serré pour garantir une étanchéité.

Selon une mise en œuvre, l'unité de charge sans fil peut comprendre au moins un câble d'alimentation, et des moyens d'étanchéité agencés autour du câble, entre une face externe du boîtier et l'unité de charge sans fil. Un tel câble d'alimentation peut alors être connecté sur une batterie de véhicule (un vélo électrique ou plus avantageusement une trottinette électrique).

Selon une mise en œuvre, la face externe du boîtier peut être fixée au chargeur avec au moins une vis, et en ce que la vis peut procurer également :
- une fixation aux moyens d'étanchéité, et/ou
- une fixation au câble d'alimentation. Les pièces du boîtier sont typiquement assemblées par des vis, et au moins une de ces vis est avantageusement utilisée aussi pour bloquer le câble d'alimentation (par pincement ou en procurant un enroulement), et/ou pour maintenir un joint ou un presse étoupe autour du câble d'alimentation. Une même vis cumule une fonction de fixation du boîtier, et de fixation / maintien d'un joint du câble.

Selon une mise en œuvre, le boîtier peut comprendre une face externe de réception agencée pour être en regard de l'appareil électronique portable lorsque ce dernier est accouplé au chargeur, et la face externe de réception peut être recouverte d'un matériau anti dérapant, par exemple en thermoplastique élastomère ou en silicone. Le maintien en place est amélioré, en supprimant les possibilités de glissement.

Selon une mise en œuvre, le chargeur peut comprendre au moins une prise agencée pour recevoir un connecteur d'un câble de recharge filaire d'un appareil électronique portable. Cela permet de proposer une alternative à de la charge par induction.

Selon une mise en œuvre, le chargeur peut comprendre des moyens de verrouillage des bras de préhension, agencés pour verrouiller les bras de préhension au moins dans une position d'accouplement de l'appareil électronique portable sur le chargeur.

Selon une mise en œuvre, le chargeur peut comprendre une interface de fixation par vis sur une bride de fixation soudée sur un guidon de véhicule deux roues. Une telle fixation par soudure est définitive et inviolable.

Selon une mise en œuvre, le chargeur peut comprendre une bride de fixation, agencée pour procurer une fixation à demeure sur un guidon d'un véhicule à deux roues. On peut prévoir une fixation définitive. On peut envisager par exemple d'utiliser des vis de sécurité, ou cachées par un élément d'habillage rapporté.

Selon une mise en œuvre, les bras de préhension peuvent être en aluminium. Un tel matériau, non ferromagnétique permet d'éviter les interférences.

Selon une mise en œuvre, le chargeur peut comprendre une unité de détection de présence de l'appareil électronique portable, et l'unité de charge sans fil n'est alimentée que lorsqu'un appareil électronique portable est détecté sur le chargeur. Une telle unité de détection peut fonctionner sur le principe de détection des courants induits dans l'unité de charge sans fil lors des mouvements d'approche et d'accouplement de l'appareil électronique portable. Le principe peut aussi être basé sur des émissions à intervalles réguliers d'un cycle de test par l'unité de charge sans fil, et l'analyse des courants de couplage entre l'unité de charge et l'appareil électronique portable.

Selon une mise en œuvre, le chargeur peut mettre en œuvre un procédé de transfert d'énergie par induction basé sur le couplage inductif ou sur le couplage par résonance. Le premier procédé basé sur le couplage inductif est comparable à celui d'un transformateur: les bobines sont spatialement séparées l'une de l'autre. Dans le cas du couplage par résonance, des capacités sont intégrées dans le circuit secondaire afin que la bobine d'émission et la bobine de réception forment un circuit oscillant.

Selon une mise en œuvre, le chargeur peut mettre en œuvre un procédé de transfert d'énergie par induction suivant un ou plusieurs standards de charge : suivant la technologie Qi du Wireless Power Consortium (WPC), introduite en 2008 et/ou la technologie Airfuel Inductive et/ou Airfuel Resonant de l'A4WP, l'Alliance for Wireless Power.

Un deuxième aspect de l'invention est relatif à une trottinette électrique, comprenant un chargeur pour appareil électronique portable selon le premier aspect de l'invention.

Selon une mise en œuvre, la trottinette peut comprendre l'appareil électronique portable, accouplé au chargeur pour appareil électronique portable, via les portions d'accostage.

Selon une mise en œuvre, le câble d'alimentation est logé dans le guidon. En d'autres termes, le câble d'alimentation sort du boîtier du chargeur pour aller directement dans un trou débouchant dans le tube formant le guidon de la trottinette, pour être invisible pour l'utilisateur. En conséquence, le câble d'alimentation est logé à l'intérieur du guidon pour ensuite descendre verticalement jusqu'à la batterie, à l'intérieur du tube jusqu'à la batterie.

Selon une mise en œuvre, le chargeur peut comprendre une unité de détection d'un identifiant de l'appareil électronique portable, et des moyens de communication avec un serveur distant, pour envoyer un rapport d'utilisation de l'appareil électronique portable. Il est alors possible de proposer alors une utilisation en location de la trottinette, pour par exemple facturer le temps d'utilisation de la trottinette qui correspond selon une mise en œuvre à temps d'appairage entre le chargeur et l'appareil électronique portable identifié.

Selon une mise en œuvre, le chargeur peut comprendre un système de verrouillage mécanique (à clé ou code par exemple) de l'appareil électronique portable accouplé au chargeur, pour permettre de laisser un certain temps la trottinette et l'appareil électronique portable sans surveillance.

Selon une mise en œuvre, l'appareil électronique portable peut présenter une silhouette de parallélogramme rectangle, et chacune des portions d'accostage peut être accouplée à un coin de l'appareil électronique portable.

Les dessins annexés illustrent l'invention :
[Fig.1] représente une vue de face du chargeur selon l'invention.
[Fig.2] représente une vue de côté du chargeur de la figure 1.
[Fig.3] représente une vue arrière du chargeur de la figure 1.
[Fig.4] représente une vue éclatée du chargeur de la figure 1.
[Fig.5] représente une vue du chargeur de la figure 1 accouplé à un appareil électronique portable.
[Fig.6] représente une vue du chargeur de la figure 1 monté sur une trottinette.

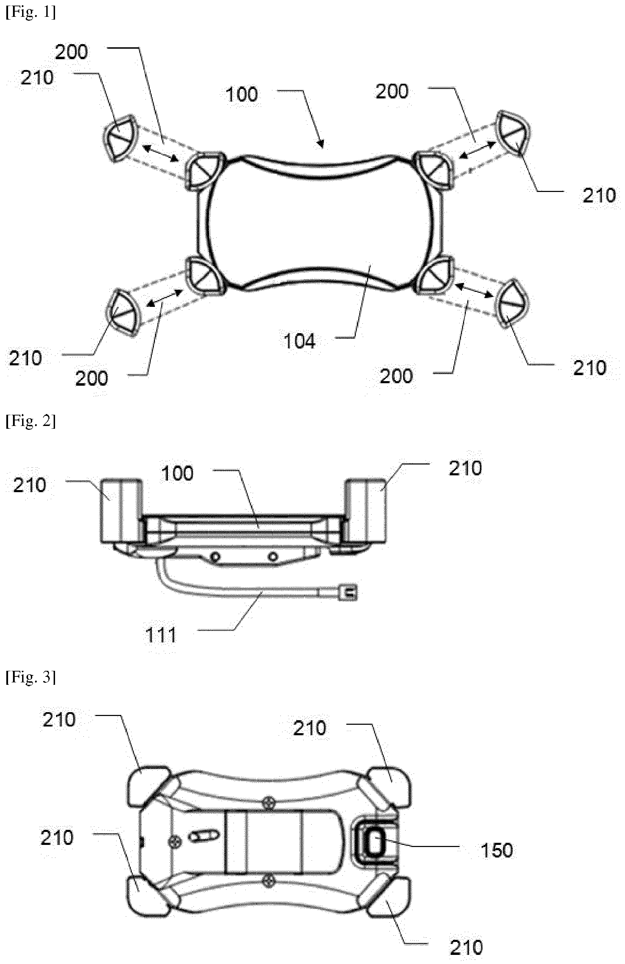

En référence à ces dessins, les figures 1 à 3 représentent un chargeur selon l'invention, vu sous trois directions : vue de face (figure 1), vue de côté (figure 2) et vue arrière (figure 3). Le chargeur comprend notamment un boîtier 100 et quatre bras de préhension 200, chacun agencé en périphérie du boîtier 100.

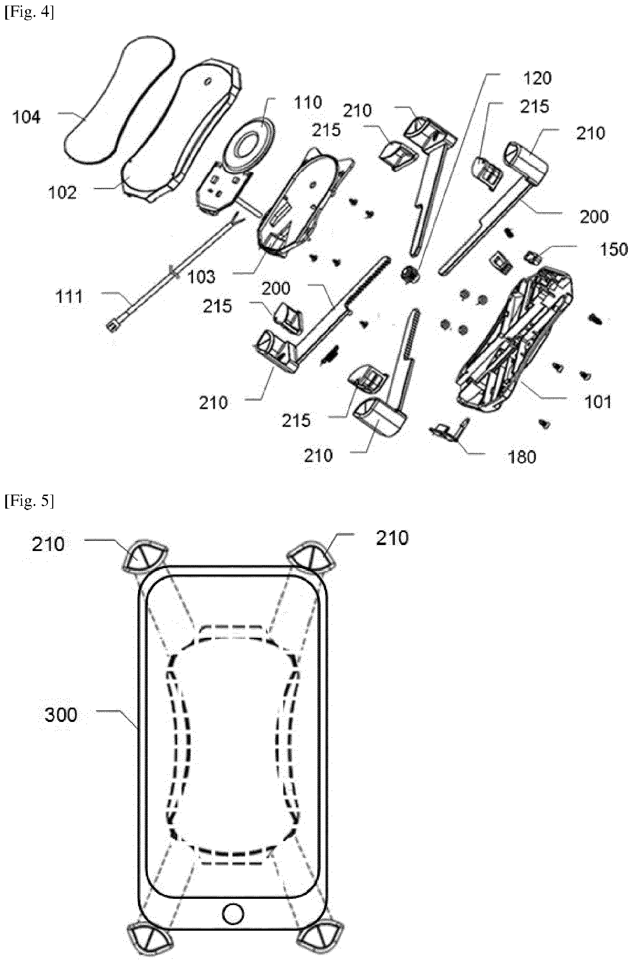

En particulier, chaque bras de préhension 200 comprend une portion d'accostage 210, pour s'engager avec un appareil électronique portable 300, comme montré sur la figure 5. En référence à la figure 1, il est à noter qu'il est possible de construire un parallélogramme rectangle dont chaque sommet est situé au niveau de chaque portion d'accostage 210.

En conséquence, et en référence à la figure 5, chaque portion d'accostage 210 est agencée pour contacter ou s'accoupler avec ou sur un coin de l'appareil électronique portable 300, ici un téléphone intelligent, autrement appelé smartphone.

Chaque bras de préhension 200 est mobile par rapport au boîtier 100. En particulier, chaque bras de préhension 200 peut se déployer comme le montre les silhouettes en pointillés sur la figure 1. Ainsi, l'utilisateur peut régler et accoupler correctement l'appareil électronique portable sur le chargeur, quelle que soit sa taille.

Un mécanisme de verrouillage avec un bouton de verrouillage 150 est prévu à l'arrière du boîtier 100, comme le montre la figure 3. Il est alors possible pour l'utilisateur de verrouiller les bras de préhension dans la position adéquate.

La figure 4 représente une vue éclatée du chargeur, avec notamment :
- le boîtier 100 essentiellement constitué des plaques arrière 101 et plaque avant 102 ;
- une unité de charge sans fil 110 ;
- une plaque intermédiaire 103 qui enferme l'unité de charge sans fil 110 dans un logement étanche ;
- les bras de préhension 200 avec les portions d'accostage 210 qui comprennent chacune un patin antidérapant 215 ;
- un mécanisme d'articulation avec un engrenage central 120
- un connecteur 180, pour donner une option de charge filaire
- des vis d'assemblage.

Dans le détail, la plaque avant 102 forme une face externe de réception pour l'appareil électronique portable 300, et est recouverte d'une feuille 104 en matériau antidérapant, tel qu'un élastomère thermoplastique (TPE), du polyuréthane ou du silicone par exemple. De même, les patins anti dérapant 215 peuvent être réalisés en élastomère thermoplastique (TPE), du polyuréthane ou du silicone par exemple. Ainsi, le maintien l'appareil électronique portable 300 est sécurisé.

Comme visible figure 4, on peut prévoir des encoches ou des retours sur les patins antidérapant 215 ou portion d'accostage 210 pour encore mieux accoupler l'appareil électronique portable 300, même si des secousses ou chocs sont appliqués au chargeur.

En ce qui concerne la cinématique de déplacement des bras de préhension 200, l'engrenage central 120 s'engage avec une crémaillère formée sur chacun des bras de préhension 200, si bien que leur mouvement est synchronisé. Le déploiement ou retrait se fait selon une direction en diagonale par rapport au parallélogramme rectangle formé par l'appareil électronique portable 300.

L'unité de charge sans fil 110 est typiquement une unité de charge par induction. Selon l'exemple représenté, le centre de l'appareil électronique portable est sensiblement aligné avec l'engrenage central 120. Cependant, si l'appareil électronique portable présente une zone de charge spécifique et particulière devant être alignée avec l'unité de charge sans fil 110, alors il peut être prévu de rendre les patins antidérapant 215 ou les portions d'accostage 210 réglables ou amovibles (dans ce dernier cas, il est prévu par exemple un kit avec différentes épaisseur). Ainsi, il est possible de changer la position des deux patins antidérapant 215 ou des deux portions d'accostage 210 supérieurs pour les décaler et ainsi modifier la position finale relative entre l'appareil électronique portable 300 et l'unité de charge sans fil 110 (selon la direction vers le haut ou vers le bas de la figure 5), de sorte à assurer une charge efficace. On peut aussi régler la longueur de certains bras.

Par ailleurs, il est prévu une plaque intermédiaire 103 qui se monte sur la plaque avant 102, de sorte à former un logement étanche pour l'unité de charge sans fil 110, ce qui permet une utilisation tout temps, en plein air. De plus, l'unité de charge sans fil 110 est alimentée par un câble d'alimentation 111.

On peut avantageusement prévoir des moyens d'étanchéité et un arrêt pour le câble d'alimentation 111 au moyen d'une des vis de fixation de la plaque arrière 101 ou de la plaque avant 102.

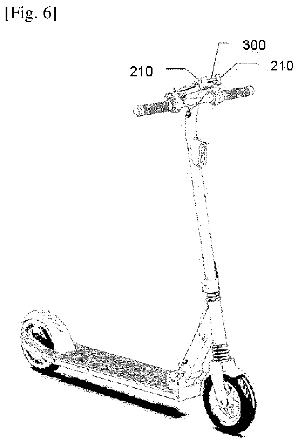

Enfin, la figure 6 représente le chargeur monté sur le guidon d'une trottinette électrique. Ainsi, il est possible d'alimenter l'unité de charge sans fil en connectant le câble d'alimentation 111 sur le circuit électrique de la trottinette. Avantageusement, on peut prévoir de fixer le chargeur à demeure sur le guidon de la trottinette, pour bien sécuriser le maintien sur la trottinette.

A cet effet, on peut prévoir une bride soudée sur le guidon de la trottinette, et une fixation par vis du boîtier sur cette bride pour assurer une inviolabilité complète.

Alternativement, on peut prévoir une bride montée avec des vis de sécurité ou indémontables, ou bien des vis ensuite cachées par un capot du chargeur.

Il est à noter que la description ci-dessus n'est pas limitative, et que les caractéristiques technique décrites ci-dessus aussi bien dans la description générale que dans la description détaillée peuvent être isolées les unes des autres ou combinées les une aux autres, tant qu'il n'y a pas d'incohérence technique.

## Revendications

1. Chargeur pour appareil électronique portable (300), comprenant :
- un boîtier (100),
- une unité de charge sans fil (110) logée dans le boîtier (100),
- une pluralité de bras de préhension (200), mobiles et réglables par rapport au boîtier (100), chaque bras de préhension (200) comprenant une portion d'accostage (210) agencée pour s'engager avec l'appareil électronique portable (300) de sorte à accoupler l'appareil électronique portable (300) avec le chargeur et le positionner en regard de l'unité de charge sans fil (110),
**caractérisé en ce que** la pluralité de bras de préhension (200) comprend quatre bras de préhension (200).

2. Chargeur pour appareil électronique portable (300) selon la revendication 1, **caractérisé en ce que** chacun des quatre bras de préhension (200) est agencé pour positionner sa portion d'accostage (210) respective sur un sommet d'un parallélogramme rectangle.

3. Chargeur pour appareil électronique portable (300) selon la revendication 1 ou la revendication 2, **caractérisé en ce qu'**il comprend un mécanisme d'articulation, et **en ce que** chacun des quatre bras de préhension (200) est connecté au mécanisme d'articulation de sorte à synchroniser le mouvement des quatre bras de préhension (200) entre eux.

4. Chargeur pour appareil électronique portable (300) selon l'une quelconque des revendications précédentes, **caractérisé en ce que** chacun des bras de préhension (200) est agencé pour se déplacer selon la direction d'une diagonale d'un même parallélogramme rectangle.

5. Chargeur pour appareil électronique portable (300) selon l'une quelconque des revendications précédentes, **caractérisé en ce qu'**au moins une des portions d'accostage (210) comprend un patin antidérapant (215), par exemple en thermoplastique élastomère ou en silicone.

6. Chargeur pour appareil électronique portable (300) selon la revendication précédente, **caractérisé en ce qu'**au moins une des portions d'accostage (210) et/ou **en ce que** ledit au moins un patin antidérapant (215), est amovible ou mobile par rapport à son bras de préhension (200) respectif, de sorte à régler une position relative finale entre l'appareil électronique portable (300) et l'unité de charge sans fil (110).

7. Chargeur pour appareil électronique portable (300) selon l'une quelconque des revendications précédentes, **caractérisé en ce que** le boîtier (100) comprend au moins un compartiment étanche dans lequel est logée l'unité de charge sans fil (110).

8. Chargeur pour appareil électronique portable (300) selon l'une quelconque des revendications précédentes, **caractérisé en ce que** l'unité de charge sans fil (110) comprend au moins un câble d'alimentation (111), et des moyens d'étanchéité agencés autour du câble, entre une face externe du boîtier (100) et l'unité de charge sans fil (110).

9. Chargeur pour appareil électronique portable (300) selon la revendication précédente, **caractérisé en ce que** la face externe du boîtier (100) est fixée au chargeur avec au moins une vis, et **en ce que** la vis procure également :
- une fixation aux moyens d'étanchéité, et/ou
- une fixation au câble d'alimentation (111).

10. Chargeur pour appareil électronique portable (300) selon l'une quelconque des revendications précédentes, **caractérisé en ce que** le boîtier (100) comprend une face externe de réception (104) agencée pour être en regard de l'appareil électronique portable (300) lorsque ce dernier est accouplé au chargeur, et **en ce que** la face externe de réception (104) est recouverte d'un matériau anti dérapant, par exemple en thermoplastique élastomère ou en silicone.

11. Chargeur pour appareil électronique portable (300) selon l'une quelconque des revendications précédentes, **caractérisé en ce qu'**il comprend au moins une prise agencée pour recevoir un connecteur d'un câble de recharge filaire d'un appareil électronique portable (300).

12. Chargeur pour appareil électronique portable (300) selon l'une quelconque des revendications précédentes, **caractérisé en ce qu'**il comprend une bride de fixation, agencée pour procurer une fixation à demeure sur un guidon d'un véhicule à deux roues.

13. Chargeur pour appareil électronique portable (300) selon l'une quelconque des revendications précédentes, **caractérisé en ce qu'**il comprend une unité de détection de présence de l'appareil électronique portable (300), et **en ce que** l'unité de charge sans fil n'est alimentée que lorsqu'un appareil électronique portable (300) est détecté sur le chargeur.

14. Trottinette électrique, comprenant un chargeur pour appareil électronique portable (300) selon l'une quelconque des revendications précédentes.

15. Trottinette électrique selon la revendication précédente, **caractérisé en ce qu'**elle comprend l'appareil électronique portable (300), accouplé au chargeur pour appareil électronique portable (300), via les portions d'accostage (210).
